# EUROPEAN PATENT SPECIFICATION

(11) **EP 2 428 342 B1**
(45) Date of publication and mention of the grant of the patent: **21.08.2013**
(21) Application number: 11180503.2
(22) Date of filing: 08.09.2011
(51) Int. Cl.: B29B 7/32, B01F 5/06, B01F 15/00, B29C 45/30

(54) **Self-cleaning static filter-mixer device for processing plastic materials**
Selbstreinigende statische Filtermischvorrichtung zur Verarbeitung von Kunststoffmaterialien
Appareil filtre-mixeur statique à nettoyage automatique pour traiter les matériaux plastiques

(30) Priority: 08.09.2010 IT MI20101623
(43) Date of publication of application: 14.03.2012
(73) Proprietor: Lanson S.r.l., Besozzo (IT)
(72) Inventor: Furlan, Giovanni, 21023 Besozzo (IT)
(74) Representative: Bergadano, Mirko

(56) References cited:
- WO-A1-2004/037512
- DE-A1- 19 530 820
- DE-A1- 19 730 380
- JP-A- 56 044 032
- US-A- 2 500 401
- US-A- 3 540 474
- US-A- 3 989 434

## Description

The present invention relates to a static self-cleaning filter-mixer device for processing plastic materials.

In the field of processing plastic materials, and in particular in the processes of injection and extrusion moulding, static filter-mixer devices (i.e. without moving parts) with different configurations are known, which have the object of filtering and homogenizing the various components of the plastic material flow.

US 3 540 474 discloses a mixing device according to the preamble of claim 1, having two sets of jets discharging into a chamber; one set is formed by radial grooves on the end of a cylindrical body, the second set is formed by grooves on a frusto-conical surface.

In any case, the known devices appear to have margins for improvement in terms of homogenization effectiveness (especially if employed for materials reinforced with fibers because they may induce the fibers to break and/or do not ensure the correct orientation thereof), versatility (as often they may not be employed with different materials), simplicity and affordability to make and use, easy to install, use and clean.

It is one object of the present invention to provide a static filter-mixer device for processing plastic materials which is highly easy and affordable to make, versatile, completely effective in the filtering and homogenizing function of plastic materials, easy to install, use and clean.

Therefore, the present invention relates to a static self-cleaning filter-mixer device for processing plastic materials, without stagnations, which is defined in essential terms in appended claim 1, and in its additional features in the dependent claims.

The device of the invention ensures effective mixing/homogenizing of the flow of processed plastic material, also in the case of plastic materials reinforced with fibers; when processing polymers loaded with fibers, the device of the invention does not decrease the dimensions of the fibers as a free-flow nozzle would, thus leaving the length of the fibers unaltered (as confirmed by laboratory tests); moreover, the device of the invention is highly simple and affordable to make, install and use, and highly versatile because it is easy to replace and interchange. The device of the invention is also particularly simple and fast to clean, also when changing colours, as there is no stagnation (or the stagnations are easy to remove).

The invention is further described in the following non-limiting embodiments, with reference to the accompanying figures, in which:
- figure 1 is an exploded side view of a static filter-mixer device for processing plastic materials in accordance with the invention;
- figures 2, 3 and 4 are a side elevation view, a top view from above and a longitudinal sectional view, respectively, of a component, and precisely of a filter body, of the device in figure 1.

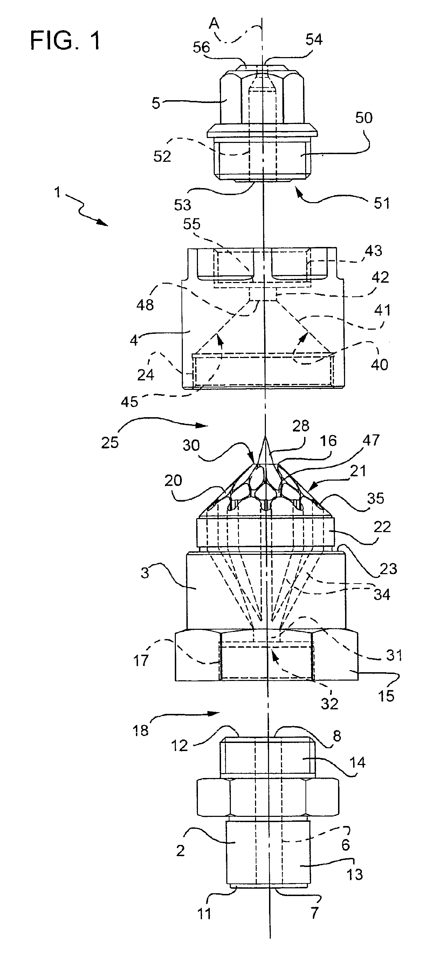

In figure 1, number 1 indicates a static filter-mixer device for processing plastic materials (polymer materials) as a whole, in particular (but not exclusively) for plastic materials reinforced with fibers.

Device 1 extends along an axis A and comprises: an inlet nipple 2 for connecting device 1 to a plastic material working apparatus (e.g., a press or extruder), known and not illustrated; a filter body 3; a hollow head 4; a terminal nozzle 5.

Nipple 2, filter body 3, head 4 and nozzle 5 are advantageously formed by respective monolithic bodies, for example made with metal material, and are releasably joined in succession along axis A, for example by means of screw couplings.

Nipple 2 is equipped with a central inner through channel 6 which extends along axis A and has an inlet 7 and an outlet 8 arranged at respective axial ends 11, 12 opposite to nipple 2; the two ends 11, 12 are equipped with respective portions 13, 14 threaded on the outside for connecting to the processing apparatus and to the filter body 3, respectively. Advantageously, a series of interchangeable nipples 2 is provided with various shapes and/or dimensions and in particular, portion 13 and/or a channel 6 having various designs for connecting to respective various apparatuses; instead, all the nipples 2 of the series have an equal portion 14 for connecting to a same filter body 3.

The filter body 3 extends along axis A between two opposite axial ends 15, 16; end 15 has a threaded seat 17 which is engaged by portion 14 of nipple 2 and together with portion 14, forms a screw coupling 18 which releasably joins nipple 2 to the body filter 3.

Arranged at end 16 is a longitudinally projecting work portion 20 having an outer surface 21 which is generically slanted with respect to axis A, and is specifically conical or frusto-conical.

The filter body 3 also comprises a second portion 22 threaded on the outside, which is arranged between the work portion 20 and an axial shoulder 23 and which together with a threaded seat 24 of head 4, forms a screw coupling 25 which releasably joins head 4 to the filter body 3.

The work portion 20, on the side opposite to the root edge 26, ends with an end point 28, e.g. substantially conical, surrounded by a substantially annular outlet conduit (later defined outlet ring 30), and which may circumferentially be continuous or interrupted, i.e. formed by angularly separate sectors.

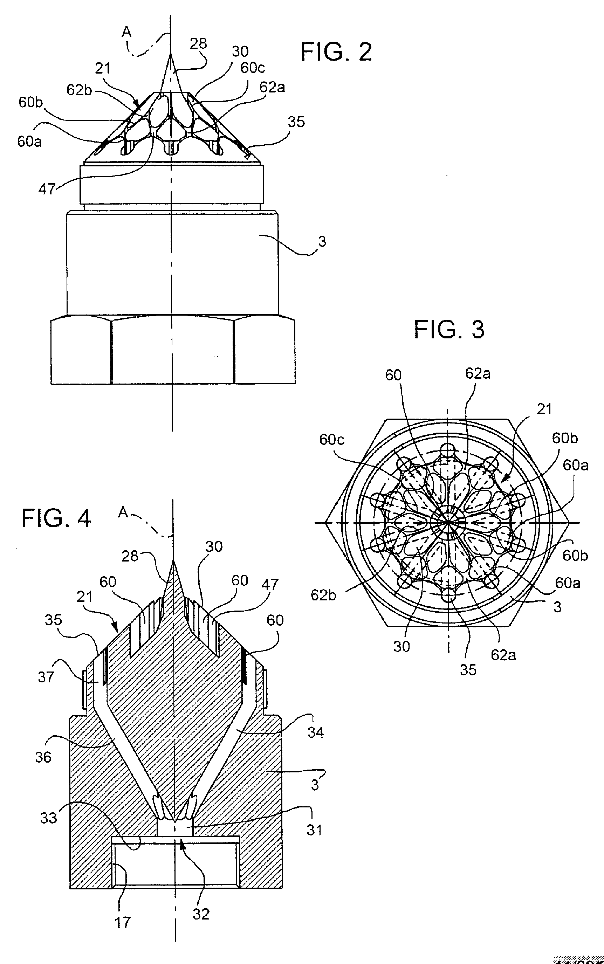

Also in reference to figures 2-4, the filter body 3 is internally equipped with a central manifold 31, e.g. substantially cylindrical, which is substantially aligned with channel 6 along axis A; when the filter body 3 is joined to nipple 2, manifold 31 has an inlet 32 matching with outlet 8 of channel 6; for example, inlet 32 is centrally formed in a bottom wall 33 of seat 17.

Moreover, the filter body 3 comprises a plurality of branching conduits 34, which depart from manifold 31 and are arranged radially about axis A. The conduits 34 end with respective outlet openings 35 arranged on surface 21 and angularly spaced apart about axis A on surface 21. Each conduit 34 has a slanted section 36, which is oblique with respect to axis A and which departs from manifold 31, and a section 37 which is substantially parallel to axis A and which ends with an opening 35. There are ten conduits 34 in the example shown, it in any event being understood that they may differ in number, and they have a substantially circular cross section.

Head 4 (figure 1) has an inner axial through cavity 40, which comprises seat 24, a work seat 41 having a shape corresponding to the shape of the work portion 20 of the filter body 3, a connecting channel 42, and another threaded seat 43 opposite to seat 24. Seat 24 receives portion 22 of the filter body 3 thus forming the screw coupling 25.

The work seat 41 houses the work portion 20 and has a counter-surface 45, which replicates the shape of surface 21 of the work portion 20 and is coupled therewith when the screw coupling 25 is tightened. Specifically, in use, surface 21 abuts against the counter-surface 45 thus forming a superficial fluid seal union.

By replicating the shape of surface 21, the counter surface 45 is also slanted with respect to axis A, e.g. substantially conical (precisely, frusto-conical).

The work seat 41 communicates with the connecting channel 42 by means of an inlet 48 of channel 42; inlet 48 matches with the outlet ring 30; point 28 is inserted into channel 42 through inlet 48; channel 42 converges into seat 43. Seat 43 receives a threaded portion 50 of nozzle 5 to form a threaded coupling 51 between head 4 and nozzle 5.

Nozzle 5 is internally equipped with a central terminal through channel 52, which extends along axis A and is hence aligned with the connecting channel 42 and has an inlet 53 and an outlet 54, which are arranged at respective axial ends opposite to nozzle 5; inlet 53 matches with an outlet 55 of the connecting channel 42 when nozzle 5 is fitted onto head 4. Nozzle 5 has a terminal portion 56, equipped with the outlet, which is shaped according to the usage of device 1.

Advantageously, a series of interchangeable nozzles 5 is provided, all having an equal threaded portion 50 for connecting to head 4; the nozzles 5 of the series may, for example, differ in shapes and/or sizes, in particular of the terminal portion 56 and/or of outlet 54.

Returning to figures 2-4, surface 21 of the filter body 3 has grooves 60 communicating with the openings 35 and with the outlet ring 30 (hence with inlet 48 of channel 42), which is defined by several separate sectors or by a continuous annular space. Surface 21 and the counter-surface 45 are in contact with each other, partially or completely, in such a way that the material only flows through the grooves 60; in particular, the counter-surface 45 upperly closes the openings 35 and hence forces the material passing in the conduits 34 to flow sideways in the grooves 60.

The grooves 60 as a whole define a mixing chamber 47.

Preferably, the grooves 60 are connected with each other to form a network 61 of interconnected grooves 60, arranged on surface 21 of the filter body 3; network 61 connects the openings 35 to the outlet ring 30.

In greater detail, network 61 comprises grooves 60 and pits 62.

Advantageously, network 61, and hence the grooves 60, the pits 62 and the outlet ring 30, are only and completely obtained on the filter body 3 (on surface 21).

The pits 62 are arranged on surface 21 at various distances from axis A. In particular, network 61 comprises at least two (optionally more) groups of pits 62 in a crown shape about axis A on surface 21 and angularly spaced apart from each other; the pits 62 of the two groups are at a different radial distance from axis A and are offset in radial direction (i.e. they are not aligned in radial direction).

The pits 62a of a first group are arranged between adjacent pairs of openings 35 and are radially advanced towards axis A with respect to the openings 35. The pits 62b of a second group are arranged in radial alignment with respective openings 35 and hence between two adjacent pits 62a of the first group, and are radially advanced towards axis A with respect to the pits 62a.

Network 61 comprises: grooves 60a which depart from the openings 35 and extend on surface 21 in radially slanted direction thus connecting the openings 35 to the pits 62a; other grooves 60b, extending on surface 21 in radially slanted direction, which connect the pits 62a with the pits 62b; other grooves 60c, extending in radial direction, which connect the pits 62b with the outlet ring 30 and hence with groove 42.

Here and later:
- "radial direction" means a direction which, on surface 21, unites any one point of surface 21 with axis A;
- "radially internal direction" means a radial direction oriented from one more radially external point to one more radially internal point of surface 21 (i.e. from any point on surface 21 towards axis A);
- "radially slanted direction" means a direction which extends, on surface 21, from any point of surface 21 and is slanted or oblique with respect to the radial direction passing through the same point.

Each groove 60a departing from an opening 35 is slanted on surface 21 with respect to the radial direction joining opening 35 to axis A; each groove 60b departing from a pit 62a is slanted on surface 21 with respect to the radial direction joining that pit 62a to axis A; instead, grooves 60c extend in substantially radial direction.

In the example shown (but not necessarily), two diverging grooves 60a depart from each opening 35; all grooves 60a departing from an opening 35 join, in a pit 62a, to a groove 60a which departs from an adjacent opening 35; then two diverging grooves 60b depart from each pit 62a to rejoin, two by two, in the pits 62b.

In the example shown, all the grooves 60 and the pits 62 substantially have the same depth; the grooves 60a, 60b approximately have the same width (and hence cross section), while grooves 60c have a larger width (and hence cross section) than grooves 60a, 60b, i.e. approximately double; it is in any event understood that the grooves 60 may have various depths and/or widths, and generally different and/or variable cross sections (along the grooves); the pits 62 may also be the same or differ in size to each other.

It is also apparent that device 1 may differ in number of openings 35, grooves 60 and/or pits 62 from the non-limiting example herein described and shown; the arrangement and orientation of the grooves 60 may also be varied.

Advantageously, the grooves 60 and the pits 62 are shaped so as not to have sharp edges.

In use, the plastic material flow (polymer) being processed, which is supplied through channel 6 along axis A, reaches manifold 31 and from here is separated into conduits 34; therefore the material is divided into separate flows in the individual conduits 34; the material then converges from the openings 35 in the mixing chamber 47, which consists of the network 61 of grooves 60, where the flows are mixed; the material runs in the grooves 60 which define chamber 47, up to the outlet ring 30, and it flows from here along the connecting channel 42, where it flows about point 28 and lastly rejoins in channel 52 of nozzle 5, from which it escapes.

The grooves 60 forming the mixing chamber 47 serve the function of rejoining and mixing the flows of material outlet from the conduits 34 by giving a component of transversal motion to the material being processed to the individual flows with subsequent mixing and homogenizing of the material.

In other words, the conformation of the filter body 3 and of head 4 (and specifically of the grooves 60) is such that the material in chamber 47 moves in a generically axial position by going from the openings 35 towards end 16 and the outlet ring 30 (hence towards inlet 48 of the connecting channel 42), which are axially arranged spaced apart by the openings 35; and obliquely with respect to axis A as surface 21 (as well as the counter-surface 45) and the grooves 60 are slanted with respect to axis A.

Furthermore, the material flows in a generically radial direction, and specifically in a radially internal direction, from each opening 35 towards the outlet ring 30 (i.e. towards axis A); more precisely, the material moves in the grooves 60 both in radially slanted direction (first in the grooves 60a and then in the grooves 60b) and in radial direction (in the grooves 60c).

According to one aspect of the invention, the threaded portion 50 of nozzle 5 and the threaded portion 14 of nipple 2 have the same dimensions so as to be selectively coupled with seat 43 of head 4; in other words, head 4 may be selectively coupled with nozzle 5 (in the normal operation of device 1) and, mounted back to front, with nipple 2 (in cleaning step). The assembly formed by head 4 and by the filter body 3 may hence be mounted front to back on nipple 2 (precisely by coupling seat 43 of head 4 with the portion of nipple 2) so as to send a material flow in the direction opposite to the normal operation of device 1 in order to free the grooves 60 from any obstructions.

Lastly, it is understood that further modifications and variants may be made to the device herein described and shown, which do not depart from the scope of the appended claims.

## Claims

1. A static filter-mixer device (1) for processing plastic materials, extending along an axis (A) and comprising a filter body (3) and a hollow head (4) fitted onto the filter body (3) for defining internally a mixing chamber (47); the filter body (3) being provided with a work portion (20), longitudinally projecting at an axial end (16) of the filter body (3) and having an outer surface (21) slanted with respect to the axis (A) and specifically conical or frusto-conical, provided with outlet openings (35) for the material processed in the device (1); the mixing chamber (47) comprising grooves (60) defined between said outer surface (21) of the filter body (3) and a corresponding counter-surface (45) of the head (4), abutting against said outer surface (21); the filter body (3) and the head (4) being coupled to each other in a releasable manner for accessing said grooves (60); wherein the grooves (60) are formed on said outer surface (21) and connect the openings (35) with an outlet ring (30) of the mixing chamber (47); the device being **characterized in that** the mixing chamber (47) comprises first grooves (60a) that extend on the outer surface (21) in radially slanted direction, and second grooves (60b) that extend on the outer surface (21) in radial direction.

2. A device according to claim 1, wherein the filter body (3) is internally provided with a central manifold (31) and a plurality of branching conduits (34), that depart from the manifold (31) and are radially arranged around the axis (A) and end with respective outlet openings (35) set on said outer surface (21).

3. A device according to one of the preceding claims, wherein the mixing chamber (47) comprises a network (61) of interconnected grooves (60) connected to one another, and pits (62) in which two or more grooves (60) join.

4. A device according to claim 3, wherein the network (61) comprises a plurality of pits (62), formed on the outer surface (21) and/or on the counter-surface (45), and set angularly spaced apart from one another and closer to the axis (A) than the openings (35).

5. A device according to claim 3 or 4, wherein the network (61) comprises pits (62) set on the outer surface (21) at respective different distances from the axis (A).

6. A device according to one of claims 3 to 5, wherein the network (61) comprises grooves (60) and/or pits (62) that are shaped so as they do not have sharp edges.

7. A device according to one of claims 3 to 6, wherein two divergent grooves (60a) depart from each opening (35), and pairs of grooves (60a) that depart from respective adjacent openings (35) join into respective pits (62).

8. A device according to one of the preceding claims, comprising, in addition to the filter body (3) and the hollow head (4), an inlet nipple (2), for joining the device (1) to a plastic materials working apparatus, and a terminal nozzle (5), that are releasably couplable to the filter body (3) and to the head (4) respectively, for example by means of screw couplings.

9. A device according to claim 8, wherein the head (4) is selectively couplable to the terminal nozzle (5), in normal operation of the device (1), and, mounted back to front, to the inlet nipple (2), for cleaning the device (1).

## Patentansprüche

1. Statische Filtermischvorrichtung (1) zum Verarbeiten von Kunststoffen, welche sich entlang einer Achse (A) erstreckt und einen Filterkörper (3) sowie einen auf den Filterkörper (3) aufgesetzten hohlen Kopf (4) aufweist, um im Inneren eine Mischkammer (47) zu bilden; wobei der Filterkörper (3) mit einem Arbeitsbereich (20) versehen ist, der von einem axialen Ende (16) des Filterkörpers (3) in Längsrichtung absteht und eine Außenfläche (21) aufweist, die in Bezug auf die Achse (A) geneigt und insbesondere konisch oder kegelstumpfförmig ist, wobei Auslassöffnungen (35) für das in der Vorrichtung (1) verarbeitete Material vorgesehen sind; wobei die Mischkammer (47) Rillen (60) aufweist, die zwischen der Außenfläche (21) des Filterkörpers (3) und einer entsprechenden Gegenfläche (45) des Kopfs (4), der an der Außenfläche (21) anliegt, ausgebildet sind; wobei der Filterkörper (3) und der Kopf (4) für den Zugang zu den Rillen (60) lösbar miteinander verbunden sind; wobei die Rillen (60) in der Außenfläche (21) gebildet sind und die Öffnungen (35) mit einem Auslassring (30) der Mischkammer (47) verbinden; wobei die Vorrichtung **dadurch gekennzeichnet, dass** die Mischkammer (47) erste Rillen (60a), die sich auf der Außenfläche (21) in radial geneigter Richtung erstrecken, und zweite Rillen (60b) aufweist, die sich auf der Außenseite (21) in radialer Richtung erstrecken.

2. Vorrichtung nach Anspruch 1, bei welcher der Filterkörper (3) im Inneren mit einem zentralen Verteiler (31) und mehreren Abzweigleitungen (34) versehen ist, welche von dem Verteiler (31) ausgehen und radial um die Achse (A) herum angeordnet sind und in jeweiligen Auslassöffnungen (35) enden, die in der Außenfläche (21) ausgebildet sind.

3. Vorrichtung nach einem der vorhergehenden Ansprüche, bei welcher die Mischkammer (47) ein Netzwerk (61) untereinander verbundener Rillen (60) und Vertiefungen (62) aufweist, in welchen zwei oder mehr Rillen (60) sich verbinden.

4. Vorrichtung nach Anspruch 3, bei welcher das Netzwerk (61) mehrere Vertiefungen (62) aufweist, die in der Außenfläche (21) und/oder in der Gegenfläche (45) ausgebildet sind, und die winklig voneinander beabstandet und näher an der Achse (a) angeordnet sind als die Öffnungen (35).

5. Vorrichtung nach Anspruch 3 oder 4, bei welcher das Netzwerk (61) Vertiefungen (62) aufweist, die in der Außenfläche in jeweils unterschiedlichen Abständen zur Achse (A) angeordnet sind.

6. Vorrichtung nach einem der Ansprüche 3 bis 5, bei welcher das Netzwerk (61) Rillen (60) und/oder Vertiefungen (62) aufweist, die derart geformt sind, dass sie keine scharfen Kanten aufweisen.

7. Vorrichtung nach einem der Ansprüche 3 bis 6, bei welcher zwei von jeder Öffnung (35) zwei divergierende Rillen (60a) abgehen, und Paare von Rillen (60a), welche von jeweiligen benachbarten Öffnungen (35) ausgehen, sich zu jeweiligen Vertiefungen (62) verbinden.

8. Vorrichtung nach einem der vorhergehenden Ansprüche, welche zusätzlich zu dem Filterkörper (3) und dem hohlen Kopf (4) einen Einlassstutzen (2) zum Verbinden der Vorrichtung (1) mit einem Kunststoffverarbeitungsgerät und eine Enddüse (5) aufweist, welche beispielsweise durch Schraubverbindungen lösbar mit dem Filterkörper (3) beziehungsweise mit dem Kopf (4) verbindbar sind.

9. Vorrichtung nach Anspruch 8, bei welcher der Kopf (4) wahlweise, im Normalbetrieb der Vorrichtung (1), mit der Enddüse (5) und, in Umkehrstellung, mit dem Einlassstutzen (2) verbindbar ist, um die Vorrichtung (1) zu reinigen.

## Revendications

1. Appareil filtre-mixeur statique (1) pour traiter les matériaux plastiques, s'étendant le long d'un axe (A) et comprenant un corps de filtre (3) et une tête creuse (4) montée sur le corps de filtre (3) pour définir en interne une chambre de mélange (47) ; le corps de filtre (3) étant doté d'une partie de travail (20), faisant saillie longitudinalement sur une extrémité axiale (16) du corps de filtre (3) et présentant une surface extérieure (21) inclinée par rapport à l'axe (A) et spécifiquement conique ou tronconique, dotée d'ouvertures de sortie (35) pour le matériau traité dans le dispositif (1) ; la chambre de mélange (47) comprenant des rainures (60) définies entre ladite surface extérieure (21) du corps de filtre (3) et une contre-surface (45) correspondante de la tête (4), butant contre ladite surface extérieure (21) ; le corps de filtre (3) et la tête (4) étant couplés de manière détachable pour accéder auxdites rainures (60) ; dans lequel les rainures (60) sont formées sur ladite surface extérieure (21) et relient les ouvertures (35) à un anneau de sortie (30) de la chambre de mélange (47) ; l'appareil étant **caractérisé en ce que** la chambre de mélange (47) comprend des premières rainures (60a) qui s'étendent sur la surface extérieure (21) dans la direction radialement inclinée, et des secondes rainures (60b) qui s'étendent sur la surface extérieure (21) dans la direction radiale.

2. Appareil selon la revendication 1, dans lequel le corps de filtre (3) est doté en interne d'un collecteur central (31) et d'une pluralité de conduits d'embranchement (34) qui partent du collecteur (31) et sont radialement disposés autour de l'axe (A) et se terminent par des ouvertures de sortie respectives (35) placées sur ladite surface extérieure (21).

3. Appareil selon l'une quelconque des revendications précédentes, dans lequel la chambre de mélange (47) comprend un réseau (61) de rainures interconnectées (60) reliées les unes aux autres, et des creux (62), dans lesquels deux ou plusieurs rainures (60) se réunissent.

4. Appareil selon la revendication 3, dans lequel le réseau (61) comprend une pluralité de creux (62) formés sur la surface extérieure (21) et/ou sur la contre-surface (45), et placés angulairement à distance les uns des autres et plus près de l'axe (A) que les ouvertures (35).

5. Appareil selon la revendication 3 ou 4, dans lequel le réseau (61) comprend des creux (62) placés sur la surface extérieure (21) à différentes distances respectives de l'axe (A).

6. Appareil selon l'une quelconque des revendications 3 à 5, dans lequel le réseau (61) comprend des rainures (60) et/ou des creux (62) qui sont formés de sorte à ne pas avoir d'arêtes vives.

7. Appareil selon l'une quelconque des revendications 3 à 6, dans lequel deux rainures (60a) divergentes partent de chaque ouverture (35), et des paires de rainures (60a) qui partent des ouvertures adjacentes (35) respectives se réunissent dans des creux respectifs (62).

8. Appareil selon l'une quelconque des revendications précédentes, comprenant outre le corps de filtre (3) et la tête creuse (4), un nipple d'entrée (2) pour joindre l'appareil (1) à un appareil de travail des matériaux plastiques, et une buse terminale (5) qui peuvent être couplés respectivement de manière détachable au corps de filtre (3) et à la tête (4) par exemple à l'aide de couplages à vis.

9. Appareil selon la revendication 8, dans lequel la tête (4) peut être couplée de manière sélective à la buse terminale (5), en fonctionnement normal de l'appareil (1) et, montée à l'envers, au nipple d'entrée (2) pour le nettoyage de l'appareil (1).
